# EUROPEAN PATENT APPLICATION

(11) **EP 4 379 000 A1**
(43) Date of publication of application: **05.06.2024**
(21) Application number: 22849879.6
(22) Date of filing: 27.07.2022
(51) Int. Cl.: C08L 67/04, C08K 11/00, B29B 9/12, B29C 48/08, A01G 13/02

(54) **BIODEGRADABLE RESIN COMPOSITION, AND BIODEGRADABLE FILM AND BIODEGRADABLE MULCHING FILM EACH USING SAME**

(30) Priority: 30.07.2021 KR 20210101044
(71) Applicant: CJ Cheiljedang Corporation, Seoul 04560 (KR)
(72) Inventor: JUNG, Minho, Seoul 04560 (KR); YEO, Jun Seok, Seoul 04560 (KR); MOON, Sun-Joo, Seoul 04560 (KR); PARK, Jeung Yil, Seoul 04560 (KR); YOON, Ki Chull, Seoul 04560 (KR)
(74) Representative: Dehns
(86) International application number: PCT/KR2022/011029
(87) International publication number: WO 2023/008903

(57) **Abstract**

An embodiment of the present invention provides a biodegradable resin composition containing biomass and a polyhydroxyalkanoate (PHA) resin, a biodegradable film and a mulching film formed using same, and a method for preparing same. A biodegradable resin composition according to an embodiment can enhance tensile strength, elongation, flexibility, and impact resistance of a film formed therefrom by containing the specific components, can be applied to various fields due to biodegradability thereof in both soil and the ocean, and can exert excellent characteristics when usefully applied to, especially, a mulching film.

## Description

### Technical Field

The present invention relates to a biodegradable resin composition and to a biodegradable film and a biodegradable mulching film using the same.

### Background Art

A mulching film refers to a film that covers the surface of crop fields such as furrows when crops are grown. By virtue of various functions such as suppression of moisture evaporation, suppression of weed growth, and suppression of loss of fertilizer components in the soil, its usage is continuously increasing, and it is significantly contributing to the increase of agricultural productivity.

However, mulching films have been recognized as a factor that significantly pollutes the rural environment since they are abandoned in the soil due to the difficulties in collection or recycling after use.

Currently, aliphatic polyesters such as polybutylene adipate terephthalate (PBAT) are widely used as materials for biodegradable mulching films. In recent years, studies to improve the limitations of physical properties of biodegradable polyesters, such as mechanical strength and hydrolysis characteristics of films, have been actively conducted using various biodegradable polyesters.

However, although PBAT has excellent mechanical properties and moldability, its use is limited since its raw materials are expensive like other biodegradable polymer resins. In addition, although PBAT is readily and quickly decomposed by chemical hydrolysis, terephthalate is a regulated hazardous substance and may cause the contamination of soil and the formation of environmental hormones.

In addition, biodegradable mulching films using biodegradable materials such as PBAT and polylactic acid (PLA) have been developed.

However, it is not easy to adjust the biodegradation rate in view of the growing period of crops, and the quality is poor as it is easily torn due to low strength and flexibility, and it is expensive; thus, it is difficult to be widely used.

Accordingly, there is an urgent need to develop a biodegradable mulching film with excellent mechanical properties such as strength and flexibility, as well as biodegradability, while minimizing the problems of soil contamination and environmental hormone formation.

### [Prior Art Document]

### [Patent Document]

(Patent Document 1) Korean Patent No. 1294346

### Disclosure of Invention

### Technical Problem

An object of the present invention is to provide a biodegradable resin composition that is capable of enhancing mechanical properties such as tensile strength, elongation, flexibility, and impact resistance and, at the same time, is biodegradable in both soil and ocean.

Another object of the present invention is to provide a biodegradable film formed from the biodegradable resin composition and a process for preparing the same.

Another object of the present invention is to provide a biodegradable mulching film that is formed from the biodegradable resin composition, is biodegradable in both soil and ocean, has excellent mechanical properties as described above, and has various functions such as soil improvement, suppression of moisture evaporation, and suppression of weed growth.

### Solution to Problem

The present invention provides a biodegradable resin composition, which comprises biomass and a polyhydroxyalkanoate (PHA) resin.

In addition, the present invention provides a biodegradable film, which comprises biomass and a polyhydroxyalkanoate (PHA) resin.

In addition, the present invention provides a process for preparing a biodegradable film, which comprises (1) melt-extruding biomass and a polyhydroxyalkanoate (PHA) resin to prepare biodegradable pellets; and (2) molding the biodegradable pellets.

Further, the present invention provides a biodegradable mulching film formed from a biodegradable resin composition.

### Advantageous Effects of Invention

As the biodegradable resin composition according to an embodiment comprises biomass and a polyhydroxyalkanoate (PHA) resin, a film formed therefrom is capable of enhancing mechanical properties such as tensile strength, elongation, flexibility, and impact resistance, and a film using the same is biodegradable in both soil and ocean. Thus, it can be applied to more diverse fields to show excellent characteristics.

In particular, when the biomass comprises epoxidized biomass, the compatibility can be further improved, the biodegradation rate can be further enhanced, and the cost of a biodegradable film and a mulching film can be improved.

Accordingly, according to an embodiment of the present invention, it is possible to provide a biodegradable film and a mulching film, which can be biodegraded in both soil and ocean and have excellent quality with enhanced thermal and mechanical properties at the same time, using the biodegradable resin composition.

### Brief Description of Drawings

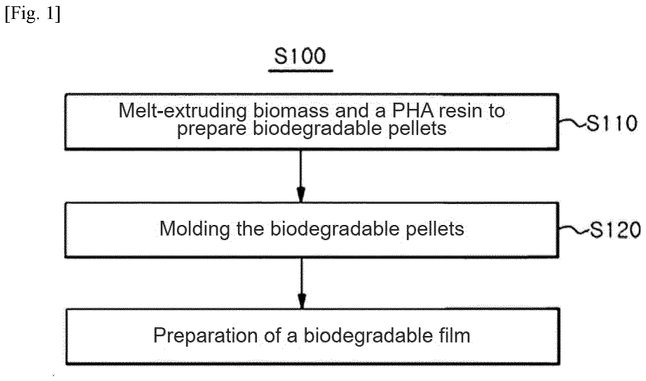

Fig. 1 shows a flow chart of a process of preparing a biodegradable film according to an embodiment of the present invention.

### Best Mode for Carrying out the Invention

Hereinafter, the present invention will be described in more detail.

The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

### [Biodegradable resin composition]

The biodegradable resin composition according to an embodiment of the present invention comprises biomass and a polyhydroxyalkanoate (hereinafter, referred to as PHA) resin.

As the biodegradable resin composition comprises biomass and a PHA resin, it is possible to enhance mechanical properties such as tensile strength, elongation, flexibility, and impact resistance, and a biodegradable film and a mulching film formed therefrom are biodegradable in both soil and ocean and are not easily torn by virtue of excellent strength and flexibility. Thus, it can exhibit excellent quality and lifespan characteristics.

In particular, the present invention has a technical significance in that, according to an embodiment, the use of biomass produces a soil improvement effect such as improving fertilizer and increasing soil fertility, and the compatibility between the biomass and the PHA is excellent, which improves cross-linking ability, so that the effect desired in the present invention can be efficiently achieved.

Hereinafter, each component of the biodegradable resin composition will be described in detail.

### Biomass

The biodegradable resin composition according to an embodiment of the present invention comprises biomass.

As the biodegradable resin composition comprises biomass, it is possible to enhance biodegradability, as well as to improve the soil. That is, the biomass has excellent biodegradability, is readily crushed when undecomposed, improves fertilizer, and increases soil strength, thereby producing a soil improvement effect.

The biomass that can be used according to an embodiment of the present invention is a plant source and may comprise various categories of plant-derived natural products.

The biomass may comprise at least one selected from the group consisting of herbal-derived natural materials and woody-derived natural materials, and lignin, cellulose, and bio by-products as constituents thereof.

Specifically, the biomass may comprise herbal-derived natural materials comprising at least one selected from the group consisting of rice straw, barley straw, wheat straw, chaff, corn stalks and leaves, soybean stems, bean pods, onion stems, sweet potato stems, pine needles, and coffee grounds.

The biomass may comprise woody-derived natural materials of needleleaf trees and broadleaf trees comprising at least one selected from the group consisting of poplar, willow, silver maple, cottonwood, green ash, black walnut, cedar, and sycamore.

In addition, the biomass may comprise various sources comprising industrial crops such as kernels and straws and castor beans for extraction of ricinolic acid; crops such as corn starch, corn oil, soybean oil, soybean flour, wheat bran, and other vegetable oils; aquatic resources such as algae, macroalgae, oceanweed, and marine microorganisms; agricultural crop residues such as corncobs, wheat straw, and rice straw; and waste and energy from other farms or meat processing operations.

In addition, the biomass may comprise constituents of the plant source, for example, lignin, cellulose, or a combination thereof.

In addition, the biomass may comprise bio by-products derived from the plant source, for example, at least one selected from the group consisting of coffee grounds, soybean hulls, corn hulls, and corncobs.

The biomass may comprise a hydroxyl group (OH group) as a functional group on its surface.

According to an embodiment of the present invention, the biomass may comprise epoxidized surface-modified biomass.

As the binding property of the biomass is increased by epoxidation treatment, the molecular weight or content of the biomass may be increased.

The biomass may comprise biomass containing an epoxidized hydroxyl group (OH group). This biomass has excellent compatibility with the PHA resin containing a hydroxyl group (OH group) and can have excellent binding strength through cross-linking while being easily mixed with each other.

In general, although biomass that is not epoxidized, such as cellulose and lignin, contains hydroxyl groups (OH groups), it hardly melts when heat is applied, which deteriorates dispersibility, and it is present in a solid state, which makes it difficult to mix with the PHA resin. Due to this problem, the physical properties of a film deteriorate as the biomass content increases.

It is of great significance in the present invention that biomass containing an epoxidized hydroxyl group (OH group) is used, which further enhances compatibility with the PHA resin having the same functional group (OH group) to facilitate mixing with the PHA resin; further, the physical properties of a biodegradable film can be further enhanced as it is cross-linked with the PHA resin.

In addition, the epoxidized biomass can further enhance elongation and tensile strength during film production as compared with non-epoxidized biomass (e.g., non-epoxidized lignin, hydrochloric acid saccharified lignin, non-epoxidized herbal-based enzyme saccharified lignin).

The epoxidized biomass may comprise 1 to 20 moles or 5 to 10 moles of an epoxy functional group based on 1 equivalent of a hydroxyl group (OH group) of the epoxidized biomass.

The epoxidation treatment will be described later.

The biomass may be employed in an amount of 10 to 50% by weight based on the total weight of the biodegradable resin composition. Specifically, the content of the biomass may be, for example, 15 to 50% by weight, for example, 15 to 45% by weight, for example, 15 to 40% by weight, for example, 15 to 35% by weight, for example, 17 to 50% by weight, for example, 17 to 45% by weight, for example, 17 to 40% by weight, for example, 17 to 35% by weight, for example, 17 to 30% by weight, for example, 20 to 50% by weight, for example, 20 to 45% by weight, or, for example, 20 to 40% by weight.

If the content of the biomass satisfies the above range, the biodegradability is further enhanced, a soil improvement effect is produced, and the crosslinking strength with the PHA resin is improved, whereby it is possible to effectively achieve the desired effects of the present invention.

### Polyhydroxyalkanoate (PHA) resin

The biodegradable resin composition according to an embodiment of the present invention comprises a PHA resin.

The PHA resin has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

Specifically, the PHA resin is a natural thermoplastic polyester polymer that accumulates in microbial cells. Since it is a biodegradable material, it can be composted and finally decomposed into carbon dioxide, water, and organic waste without generating toxic waste. In particular, the PHA resin is biodegradable in soil and ocean. Thus, when the biodegradable resin composition comprises the PHA resin, it is biodegradable under any environmental conditions, such as soil and ocean, and has environmentally friendly characteristics. Thus, a biodegradable film formed using the biodegradable resin composition containing the PHA resin can be used in various fields.

A PHA resin may be formed by enzyme-catalyzed polymerization of one or more monomer repeat units in living cells.

The PHA resin may be a copolymerized polyhydroxyalkanoate resin (hereinafter, referred to as a PHA copolymer). Specifically, it may be a copolymer containing two or more different repeat units in which the different repeat units are randomly distributed in the polymer chain.

Examples of repeat units that may be contained in the PHA include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3-hydroxydecanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA resin may contain one or more repeat units selected from the above.

Specifically, the PHA resin may comprise one or more repeat units selected from the group consisting of 3-HB, 4-HB, 3-HP, 3-HH, 3-HV, 4-HV, 5-HV, and 6-HH.

More specifically, the PHA resin may comprise a 4-HB repeat unit. That is, the PHA resin may be a PHA copolymer containing a 4-HB repeat unit.

In addition, the PHA resin may comprise isomers. For example, the PHA resin may comprise structural isomers, enantiomers, or geometric isomers. Specifically, the PHA resin may comprise structural isomers.

In addition, the PHA resin may be a PHA copolymer that comprises a 4-HB repeat unit and further comprises one repeat unit different from the 4-HB repeat unit, or two, three, four, five, six, or more repeat units different from each other.

According to an embodiment of the present invention, the PHA resin may comprise a copolymerized polyhydroxyalkanoate resin comprising at least one repeat unit selected from the group consisting of 3-HB, 3-HP, 3-HH, 3-HV, 4-HV, 5-HV, and 6-HH, and a 4-HB repeat unit.

Specifically, the PHA copolymer may comprise a 4-HB repeat unit and further comprises one or more repeat units selected from the group consisting of a 3-HB repeat unit, a 3-HP repeat unit, a 3-HH repeat unit, a 3-HV repeat unit, a 4-HV repeat unit, a 5-HV repeat unit, and a 6-HH repeat unit. More specifically, the PHA resin may be a copolymerized polyhydroxyalkanoate resin comprising a 3-HB repeat unit and a 4-HB repeat unit.

For example, the PHA resin may be poly-3-hydroxybutyrate-co-4-hydroxybutyrate (hereinafter, referred to as 3HB-co-4HB).

According to an embodiment of the present invention, it is important to adjust the content of the 4-HB repeat unit in the PHA copolymer.

That is, in order to achieve the physical properties desired in the present invention, in particular, to increase the biodegradability in soil and ocean and to achieve excellent physical properties such as thermal and mechanical properties, the content of the 4-HB repeat unit in the PHA copolymer may be important.

More specifically, the PHA copolymer may comprise a 4-HB repeat unit in an amount of 0.1% by weight to 60% by weight based on the total weight of the PHA copolymer. For example, the content of the 4-HB repeat unit may be 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight, based on the total weight of the PHA copolymer.

If the content of the 4-HB repeat unit satisfies the above range, the biodegradability in soil and ocean may be increased, the thermal properties of a material may be improved, and mechanical properties such as flexibility and strength may be further enhanced.

In addition, the PHA resin comprises at least one or more of a 4-HB repeat unit, and the content of the 4-HB repeat unit may be controlled to adjust the crystallinity of the PHA resin. That is, the PHA resin may be a PHA copolymer with controlled crystallinity.

The PHA resin whose crystallinity is adjusted may be one in which its crystallinity and amorphousness are adjusted as the irregularities are increased in its molecular structure. Specifically, the types and ratios of the monomers or the types and/or contents of the isomers may be adjusted.

The PHA resin may comprise a combination of two or more PHA resins having different crystallinity. That is, the PHA resin may be adjusted to have the content of a 4-HB repeat unit in the specific range by mixing two or more types of PHA resins having different crystallinities.

For example, the PHA resin comprises a mixed resin of a first PHA resin and a second PHA resin having different contents of a 4-HB repeat unit, and the PHA resin may be adjusted such that the content of a 4-HB repeat unit is 0.1 to 60% by weight based on the total weight of the PHA resin. Specific characteristics of the first PHA resin and the second PHA resin are described later.

Meanwhile, the PHA copolymer may comprise the 3-HB repeat unit in an amount of 20% by weight or more, 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less, based on the total weight of the PHA copolymer.

Meanwhile, the PHA resin may have a glass transition temperature (Tg) of, for example, -45°C to 80°C, -35°C to 80°C, -30°C to 80°C, -25°C to 75°C, -20°C to 70°C, - 35°C to 5°C, -25°C to 5°C, -35°C to 0°C, -25°C to 0°C, -30°C to -10°C, -35°C to -15°C, -35°C to -20°C, -20°C to 0°C, -15°C to 0°C, or -15°C to -5°C.

The crystallization temperature (Tc) of the PHA resin, for example, may not be measured or may be, for example, 70°C to 120°C, 75°C to 120°C, 75°C to 115°C, 75°C to 110°C, or 90°C to 110°C.

The melting temperature (Tm) of the PHA resin, for example, may not be measured or may be, for example, 100°C to 170°C, for example, 110°C to 150°C, or, for example, 120°C to 140°C.

The PHA resin may have a weight average molecular weight (Mw) of, for example, 10,000 g/mole to 1,200,000 g/mole. For example, the weight average molecular weight of the PHA resin may be 50,000 g/mole to 1,200,000 g/mole, 100,000 g/mole to 1,200,000 g/mole, 50,000 g/mole to 1,000,000 g/mole, 100,000 g/mole to 1,000,000 g/mole, 200,000 g/mole to 1,200,000 g/mole, 250,000 g/mole to 1,150,000 g/mole, 300,000 g/mole to 1,100,000 g/mole, 350,000 g/mole to 1,000,000 g/mole, 350,000 g/mole to 950,000 g/mole, 100,000 g/mole to 900,000 g/mole, 200,000 g/mole to 800,000 g/mole, 200,000 g/mole to 700,000 g/mole, 250,000 g/mole to 650,000 g/mole, 200,000 g/mole to 400,000 g/mole, 300,000 g/mole to 800,000 g/mole, 300,000 g/mole to 600,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, or 600,000 g/mole to 900,000 g/mole.

The PHA resin may comprise a first PHA resin, a second PHA resin, or a mixed resin of the first PHA resin and the second PHA resin.

The first PHA resin and the second PHA resin may be distinguished in terms of the content of a 4-HB repeat unit, glass transition temperature (Tg), crystallization temperature (Tg), and melting temperature (Tm).

Specifically, the first PHA resin may comprise a 4-HB repeat unit in an amount of, for example, 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight, based on the total weight of the first PHA resin.

The glass transition temperature (Tg) of the first PHA resin may be, for example, - 45°C to -10°C, -35°C to -10°C, -35°C to -15°C, -35°C to -20°C, or -30°C to -20°C.

The crystallization temperature (Tc) of the first PHA resin, for example, may not be measured or may be, for example, 60°C to 120°C, 60°C to 110°C, 70°C to 120°C, or 75°C to 115°C.

The melting temperature (Tm) of the first PHA resin, for example, may not be measured or may be, for example, 100°C to 170°C, 100°C to 160°C, 110°C to 160°C, or 120°C to 150°C.

The first PHA resin may have a weight average molecular weight (Mw) of, for example, 10,000 g/mole to 1,200,000 g/mole, 10,000 g/mole to 1,000,000 g/mole, 50,000 g/mole to 1,000,000 g/mole, 50,000 g/mole to 1,200,000 g/mole, 200,000 g/mole to 1,200,000 g/mole, 300,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 400,000 g/mole.

Meanwhile, the second PHA resin may comprise a 4-HB repeat unit in an amount of 0.1% to 30% by weight based on the total weight of the second PHA resin. For example, the second PHA resin may comprise a 4-HB repeat unit in an amount of, for example, 0.1% by weight to 30% by weight, 0.5% by weight to 30% by weight, 1% by weight to 30% by weight, 3% by weight to 30% by weight, 1% by weight to 28% by weight, 1% by weight to 25% by weight, 1% by weight to 24% by weight, 1% by weight to 20% by weight, 1% by weight to 15% by weight, 2% by weight to 25% by weight, 3% by weight to 25% by weight, 3% by weight to 24% by weight, 5% by weight to 24% by weight, 5% by weight to 20% by weight, greater than 5% by weight to less than 20% by weight, 7% by weight to 20% by weight, 10% by weight to 20% by weight, 15% by weight to 25% by weight, or 15% by weight to 24% by weight.

The first PHA resin and the second PHA resin may be different from each other in terms of the content of a 4-HB repeat unit.

The glass transition temperature (Tg) of the second PHA resin may be, for example, -30°C to 80°C, for example, -30°C to 10°C, for example, -25°C to 5°C, for example, -25°C to 0°C, for example, -20°C to 0°C, or, for example, -15°C to 0°C.

The glass transition temperature (Tg) of the first PHA resin and the glass transition temperature (Tg) of the second PHA resin may be different from each other.

The second PHA resin may have a crystallization temperature (Tc) of, for example, 70°C to 120°C, for example, 75°C to 115°C, or 80°C to 110°C, or, for example, may not be measured.

The second PHA resin may have a melting temperature (Tm) of, for example, 100°C to 170°C, for example, 105°C to 165°C, for example, 110°C to 160°C, for example, 100°C to 150°C, for example, 115°C to 155°C, for example, 120°C to 160°C, or, for example, 120°C to 150°C.

The second PHA resin may have a weight average molecular weight (Mw) of 10,000 g/mole to 1,200,000 g/mole, 50,000 g/mole to 1,100,000 g/mole, 100,000 g/mole to 1,000,000 g/mole, 300,000 g/mole to 1,000,000 g/mole, 100,000 g/mole to 900,000 g/mole, 200,000 g/mole to 800,000 g/mole, 200,000 g/mole to 600,000 g/mole, 200,000 g/mole to 400,000 g/mole, or 400,000 g/mole to 700,000 g/mole.

Specifically, the first PHA resin has a glass transition temperature (Tg) of -35°C to -15°C, the second PHA resin satisfies at least one characteristic selected from a glass transition temperature (Tg) of -15°C to 0°C, a crystallization temperature (Tc) of 80°C to 110°C, and a melting temperature (Tm) of 120°C to 160°C, and the glass transition temperature (Tg) of the first PHA resin and the glass transition temperature (Tg) of the second PHA resin may be different from each other. In addition, the crystallization temperature (Tc) and melting temperature (Tm) of the first PHA resin may not be measured.

If the first PHA resin and the second PHA resin each satisfy at least one of the 4-HB repeat unit, glass transition temperature (Tg), crystallization temperature (Tc), and melting temperature (Tm) in the above ranges, it may be more advantageous for achieving the desired effect in the present invention.

In addition, the first PHA resin and the second PHA resin may each be a PHA resin whose crystallinity is controlled.

For example, the first PHA resin may comprise an amorphous PHA resin (hereinafter, referred to as an aPHA resin), and the second PHA resin may comprise a semi-crystalline PHA resin (hereinafter, referred to as an scPHA resin).

Specifically, the first PHA resin may be an aPHA resin or a mixed resin of an aPHA resin and an scPHA resin.

Specifically, the second PHA resin may be an scPHA resin or a mixed resin of an aPHA resin and an scPHA resin.

The aPHA resin and the scPHA resin may be distinguished in terms of the content of a 4-HB repeat unit, glass transition temperature (Tg), crystallization temperature (Tg), melting temperature (Tm), or the like.

The aPHA resin may comprise a 4-HB repeat unit in an amount of, for example, 25 to 50% by weight based on the total weight of the PHA resin.

The aPHA resin may have a glass transition temperature (Tg) of, for example, -35°C to -20°C.

The crystallization temperature (Tc) of the aPHA resin may not be measured.

The melting temperature (Tm) of the aPHA resin may not be measured.

The scPHA resin may comprise a 4-HB repeat unit in an amount of, for example, 1 to less than 25% by weight based on the total weight of the PHA resin.

The scPHA resin may have a glass transition temperature (Tg) of -20°C to 0°C.

The scPHA resin may have a crystallization temperature (Tc) of 75°C to 115°C.

The scPHA resin may have a melting temperature (Tm) of 110°C to 160°C.

According to an embodiment of the present invention, the PHA resin may be employed in an amount of 5% by weight or more, 8% by weight or more, 10% by weight or more, 12% by weight or more, 14% by weight or more, 15% by weight or more, 16% by weight or more, or 17% by weight or more, and 80% by weight or less, 70% by weight or less, 60% by weight or less, 50% by weight or less, or 40% by weight or less, based on the total weight of the biodegradable resin composition.

Specifically, the biodegradable resin composition may comprise the PHA resin in an amount of, for example, 10 to 80% by weight, for example, 10 to 70% by weight, for example, 10 to 60% by weight, for example, 10 to 50% by weight, for example, 10 to 40% by weight, for example, 10 to 30% by weight, for example, 14 to 80% by weight, for example, 14 to 70% by weight, for example, 14 to 60% by weight, for example, 14 to 50% by weight, for example, 15 to 80% by weight, for example, 15 to 70% by weight, for example, 15 to 60% by weight, for example, 15 to 50% by weight, for example, 17 to 80% by weight, for example, 17 to 50% by weight, for example, 17 to 30% by weight, for example, 20 to 80% by weight, for example, 20 to 75% by weight, for example, 20 to 70% by weight, for example, 20 to 60% by weight, for example, 20 to 40% by weight, or, for example, 40 to 80% by weight, based on the total weight of the biodegradable resin composition.

According to another embodiment of the present invention, the first PHA resin may be employed in an amount of, for example, 5 to 80% by weight, for example, 10 to 80% by weight, for example, 20 to 80% by weight, for example, 20 to 75% by weight, for example, 20 to 70% by weight, for example, 20 to 60% by weight, for example, 20 to 40% by weight, for example, 10 to 40% by weight, for example, 5 to 20% by weight, or, for example, 40 to 80% by weight, based on the total weight of the biodegradable resin composition.

According to another embodiment of the present invention, the second PHA resin may be employed in an amount of, for example, 5 to 80% by weight, for example, 10 to 80% by weight, for example, 10 to 60% by weight, for example, 20 to 80% by weight, for example, 20 to 75% by weight, for example, 20 to 70% by weight, for example, 20 to 60% by weight, for example, 20 to 40% by weight, for example, 5 to 20% by weight, or, for example, 40 to 80% by weight, based on the total weight of the biodegradable resin composition.

Meanwhile, when the PHA resin comprises the first PHA resin, it may comprise, for example, 1% to 95% by weight. If the first PHA resin is used alone, the first PHA resin may be employed in an amount of, for example, 5 to 80% by weight based on the total weight of the biodegradable resin composition. Specifically, the first PHA resin may be employed in an amount of 10% by weight or more and 70% by weight or less or 40% by weight or less.

In addition, according to another embodiment of the present invention, if the PHA resin comprises a mixed resin of the first PHA resin and the second PHA resin, the first PHA resin may be employed in an amount of, for example, 1 to 50% by weight, for example, 5 to 40% by weight, 5 to 20% by weight, 10% by weight to 40% by weight, or, for example, 20 to 40% by weight, based on the total weight of the biodegradable resin composition.

When the PHA resin comprises the second PHA resin, the second PHA resin may be employed in an amount of, for example, 1% by weight to 95% by weight based on the total weight of the biodegradable resin composition. If the second PHA resin is used alone, the second PHA resin may be employed in an amount of 50% by weight or more, 55% by weight or more, 60% by weight or more, 65% by weight or more, or 70% by weight or more, and 95% by weight or less, 90% by weight or less, 85% by weight or less, or 80% by weight or less, based on the total weight of the biodegradable resin composition. If the second PHA resin is used alone, the second PHA resin may be employed in an amount of, for example, 50 to 95% by weight based on the total weight of the biodegradable resin composition.

As another example, if the second PHA resin is mixed with the first PHA resin to be used, the second PHA resin is employed in an amount of, for example, 5 to 99% by weight, for example, 20 to 80% by weight, for example, 30 to 70% by weight, or, for example, 30 to 50% by weight, based on the total weight of the biodegradable resin composition. In addition, the second PHA resin may be employed in an amount of 5% by weight to 60% by weight, 5% by weight to 40% by weight, 40% by weight to 60% by weight, 5% by weight to 20% by weight, or 10% by weight to 40% by weight.

According to another embodiment of the present invention, when the PHA resin comprises a mixed resin of the first PHA resin and the second PHA resin, the weight ratio of the first PHA resin to the second PHA resin may be, for example, 1:0.5 to 3, for example, 1:0.5 to 2.5, or, for example, 1:0.5 to 2.

According to another embodiment of the present invention, the weight ratio of the first PHA resin to the second PHA resin to the biomass may be 1:0.5 to 9:1 to 2.

If the content of the PHA resin and the biomass, and their content ratio each satisfy the above ranges, thermal properties and mechanical properties can be further enhanced, and moldability, processability, and productivity can also be enhanced when a biodegradable film or a mulching film is produced.

### Biodegradable resin

The biodegradable resin composition according to an embodiment of the present invention may further comprise at least one selected from the group consisting of aliphatic polyester-based biodegradable resins and aliphatic/aromatic copolyester-based biodegradable resins as a component that provides biodegradability while securing mechanical properties suitable for the use of a biodegradable film or mulching film prepared using the same.

Specifically, the type of the biodegradable resin is not particularly limited as long as it is commonly used. The representative biodegradable resin may comprise at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS). Specifically, the biodegradable resin may comprise at least one selected from the group consisting of polybutylene adipate terephthalate (PBAT), polylactic acid (PLA), polybutylene succinate (PBS), and thermoplastic starch (TPS). More specifically, the biodegradable resin may comprise at least one selected from the group consisting of polybutylene adipate terephthalate (PBAT) and polylactic acid (PLA). In addition, the biodegradable resin may comprise polybutylene adipate terephthalate (PBAT).

The biodegradable resin may be employed in an amount of, for example, 0.001% by weight or more, 1% by weight or more, 5% by weight or more, 10% by weight or more, 20% by weight or more, 30% by weight or more, 40% by weight or more, 50% by weight or more, 55% by weight or more, 60% by weight or more, 65% by weight or more, or 70% by weight or more, and, for example, 80% by weight or less, 75% by weight or less, 70% by weight or less, 65% by weight or less, 60% by weight or less, 50% by weight or less, 40% by weight or less, 30% by weight or less, 20% by weight or less, or 10% by weight or less, based on the total weight of the biodegradable resin composition.

Specifically, if the biodegradable resin composition further comprises the biodegradable resin, the weight ratio of the PHA resin to the biodegradable resin may be 1:0.1 to 9, 1:0.5 to 8, 1:0.5 to 6, 1:0.5 to 5, 1:1 to 8, 1: 1 to 6, 1: 1 to 5, or 1: 1 to 4. For example, the biodegradable composition may further comprise a PBAT resin as a biodegradable resin and may comprise the PHA resin and the PBAT resin at a weight ratio of 1:0.1 to 9, 1:0.5 to 9, 1:0.7 to 8, 1:0.8 to 8, 1:1 to 8, 1:1 to 6, 1:1 to 5, or 1:1 to 4.

If the biodegradable resin composition comprises the biodegradable resin in the above range, mechanical properties suitable for use as a biodegradable film or a mulching film can be easily achieved; thus, there is an advantage in that it can be used in various ways. For example, as the biodegradable resin is further employed, it is possible to further enhance the tensile strength and elongation.

### Physical property improver

The biodegradable resin composition according to an embodiment of the present invention may further comprise a physical property improver to further enhance the physical properties of a biodegradable film or mulching film prepared using the same.

The physical property improver may comprise at least one selected from the group consisting of diamines, diacids, and isocyanates.

The physical property improver may further enhance physical properties by combining with an epoxy functional group contained in the epoxidized biomass and/or a hydroxyl group (OH group) contained in the biomass and/or the PHA resin.

The physical property improver may be employed in an amount of 0.001 to 30% by weight based on the total weight of the biodegradable resin composition. The physical property improver may be employed in an amount of 0.1% by weight or more, 0.5% by weight or more, 1% by weight or more, 1.5% by weight or more, or 2% by weight or more. The additive may be employed in an amount of 30% by weight or less, 28% by weight or less, 25% by weight or less, 20% by weight or less, 15% by weight or less, 10% by weight or less, 8% by weight or less, or 5% by weight or less.

The physical property improver may be variously selected according to the use of the biodegradable resin composition. If the above range is satisfied, the desired physical properties in the present invention can be effectively achieved.

### Additive

The biodegradable resin composition may further comprise at least one additive selected from the group consisting of pigments, colorant absorbers, light absorbers, antioxidants, compatibilizers, weight agents, nucleating agents, melt strength enhancers, and slip agents.

The additive may be employed in an amount of 0.1 to 30% by weight based on the total weight of the biodegradable resin composition.

The additive may be employed in an amount of 0.1% by weight or more, 0.5% by weight or more, 1% by weight or more, 1.5% by weight or more, or 2% by weight or more. The additive may be employed in an amount of 30% by weight or less, 28% by weight or less, 25% by weight or less, 20% by weight or less, 15% by weight or less, 10% by weight or less, 8% by weight or less, or 5% by weight or less.

The pigment may comprise at least one selected from the group consisting of carbon black and cobalt green. The pigment may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total weight of the biodegradable resin composition.

The antioxidant is an additive for preventing decomposition by ozone or oxygen, preventing oxidation during storage, and preventing deterioration of the physical properties of a film.

Any commonly used antioxidant may be used as the antioxidant as long as the effect of the present invention is not impaired.

Specifically, the antioxidant may comprise at least one selected from the group consisting of hindered phenol-based antioxidants and phosphite-based (phosphorus-based) antioxidants.

The hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5-methylphenyl)propionyloxy]-1,1-dimethylethyl]-2,4,8,10-tetraoxaspiro[5.5]undecane.

The phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The antioxidant may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total weight of the biodegradable resin composition.

If the content of the antioxidant satisfies the above range, the physical properties of a film may be enhanced, and it may be more advantageous for achieving the desired effects of the present invention.

The compatibilizer is an additive for imparting compatibility by removing heterophase of the biomass, the PHA resin, and/or the biodegradable polymer resin.

Any commonly used compatibilizer may be used as the compatibilizer as long as the effect of the present invention is not impaired.

Specifically, the compatibilizer may comprise at least one selected from the group consisting of polyvinyl acetates (PVAc), isocyanates, polypropylene carbonates, glycidyl methacrylates, ethylene vinyl alcohols, polyvinyl alcohols (PVA), ethylene vinyl acetates, and maleic anhydrides.

The compatibilizer may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total weight of the biodegradable resin composition.

If the content of the compatibilizer satisfies the above range, the physical properties of a film may be enhanced by increasing the compatibility between the resins used, and it may be more advantageous for achieving the desired effects of the present invention.

The weight agent is an inorganic material and an additive for increasing moldability by increasing the crystallization rate during the molding process and for reducing the problem of cost increase due to the use of the biodegradable resin.

Any commonly used inorganic materials may be used as the weight agent as long as the effect of the present invention is not impaired.

Specifically, the weight agent may comprise at least one selected from the group consisting of calcium carbonate, such as light or heavy calcium carbonate, silica, talc, kaolin, barium sulfate, clay, calcium oxide, magnesium hydroxide, titanium oxide, carbon black, and glass fibers.

The weight agent may have an average particle size of 0.5 µm to 5 µm. If the average particle size of the weight agent is less than 0.5 µm, it is difficult for the particles to be dispersed. If it exceeds 5 µm, the size of the particles becomes excessively large, which may impair the effects of the present invention.

The weight agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total weight of the biodegradable resin composition.

If the content of the weight agent satisfies the above range, it may be more advantageous for achieving the desired effects of the present invention.

The nucleating agent is an additive for supplementing or changing the crystallization morphology of a polymer and for enhancing the crystallization (solidification) rate when a melt of the polymer is cooled. In particular, since the PHA resin used in the present invention has a low crystallization rate, the process may not be readily carried out since it becomes too soft. If the nucleating agent is used to solve this problem, the crystallization rate can be increased to further enhance the processability, moldability, and productivity, and it is possible to effectively achieve the desired physical properties.

Common nucleating agents may be used as long as the effects of the present invention are not impaired.

Specifically, the nucleating agent may be an elemental substance (pure substance), a metal compound comprising a complex oxide, such as carbon black, calcium carbonate, synthetic silicic acid and salts, silica, zinc white, clay, kaolin, basic magnesium carbonate, mica, talc, quartz powder, diatomite, dolomite powder, titanium oxide, zinc oxide, antimony oxide, barium sulfate, calcium sulfate, alumina, calcium silicate, metal salts of organic phosphorus, and boron nitride; a low molecular weight organic compound having a metal carboxylate group, such as a metal salt of octylic acid, toluic acid, heptanoic acid, pelargonic acid, lauric acid, myristic acid, palmitic acid, stearic acid, behenic acid, cerotic acid, montanic acid, melissic acid, benzene acid, p-tert-butylbenzene acid, terephthalic acid, terephthalic acid monomethyl ester, isophthalic acid, and isophthalic acid monomethyl ester; a polymeric organic compound having a metal carboxylate group, such as a salt of a carboxyl group-containing polyethylene obtained by oxidation of polyethylene, a carboxyl group-containing polypropylene obtained by oxidation of polypropylene, a copolymer of an acrylic acid or methacrylic acid and an olefin (e.g., ethylene, propylene, and butene-1), a copolymer of an acrylic or methacrylic acid and styrene, a copolymer of an olefin and maleic anhydride, and a copolymer of styrene and maleic anhydride; a polymeric organic compound, such as an alpha-olefin having 5 or more carbon atoms branched to a carbon atom in position 3 (e.g., 3,3-dimethylbutene-1,3-methylbutene-1,3-methylpentene-1,3-methylhexene-1 and 3,5,5-trimethylhexene-1), a polymer of vinylcycloalkanes (e.g., vinylcyclopentane, vinylcyclohexane, and vinylnorbomane), polyalkylene glycols (e.g., polyethylene glycol and polypropylene glycol), poly(glycolic acid), cellulose, a cellulose ester, and a cellulose ether; phosphoric acid or phosphorous acid and a metal salt thereof, such as diphenyl phosphate, diphenyl phosphite, a metal salt of bis(4-tert-butylphenyl)phosphate, and methylene bis-(2,4-tert-butylphenyl) phosphate; a sorbitol derivative, such as bis(p-methylbenzylidene) sorbitol and bis(p-ethylbenzylidene) sorbitol; and thioglycolic anhydride, p-toluenesulfonic acid, and a metal salt thereof. The nucleating agents may be used alone or in combination thereof.

The nucleating agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total weight of the biodegradable resin composition.

If the content of the nucleating agent satisfies the above range, the crystallization rate can be increased to enhance the moldability, and it is possible to further enhance the productivity and processability by enhancing the crystallization rate during, for example, the cutting step for producing pellets or in the preparation process.

The melt strength enhancer is an additive for improving the melt strength of reactants.

Any commonly used melt strength enhancer may be used as the melt strength enhancer as long as the effect of the present invention is not impaired.

Specifically, the melt strength agent may comprise at least one selected from the group consisting of polyesters, styrene-based polymers (such as acrylonitrile butadiene styrene and polystyrene), polysiloxanes, organomodified siloxane polymers, and maleic anhydride-grafted ethylene propylene diene monomer (MAH-g-EPDM).

The melt strength enhancer may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total weight of the biodegradable resin composition.

If the content of the melt strength agent satisfies the above range, it may be more advantageous for achieving the desired effects of the present invention.

The slip agent is an additive for enhancing the slip properties (slippery properties) during extrusion and for preventing film surfaces from sticking to each other.

Any commonly used slip agent may be used as the slip agent as long as the effect of the present invention is not impaired. For example, the slip agent may be at least one selected from the group consisting of erucamide, oleamide, and stearamide.

The slip agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total weight of the biodegradable resin composition.

If the content of the slip agent satisfies the above range, the processability, productivity, and moldability may be further enhanced, and it may be more advantageous for achieving the desired effects of the present invention.

The biodegradable resin composition may comprise a crosslinking agent and/or a stabilizer as additional additives.

The crosslinking agent is an additive for modifying the properties of the PHA and increasing the molecular weight of the resin. Common crosslinking agents may be used as long as the effects of the present invention are not impaired.

For example, the crosslinking agent may be at least one selected from the group consisting of fatty acid esters, natural oil containing an epoxy group (epoxylated), diallyl phthalate, pentaerythritol tetraacrylate, trimethylolpropane triacrylate, pentaerythritol triacrylate, dipentaerythritol pentaacrylate, diethylene glycol dimethacrylate, and bis(2-methacryloxyethyl)phosphate.

The crosslinking agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total weight of the biodegradable resin composition.

The stabilizer is an additive for protecting against oxidation and heat and preventing color change. Any commonly used stabilizer may be used as the stabilizer as long as the effect of the present invention is not impaired.

Specifically, the stabilizer may be one selected from the group consisting of trimethyl phosphate, triphenyl phosphate, trimethyl phosphine, phosphoric acid, and phosphorous acid.

The stabilizer may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total weight of the biodegradable resin composition.

### [Biodegradable film and process for preparing the same]

According to an embodiment of the present invention, there is provided a biodegradable film, which comprises biomass and a polyhydroxyalkanoate (PHA) resin.

The biomass and PHA resin are as described above.

According to an embodiment of the present invention, there is provided a biodegradable film formed from the biodegradable resin composition.

The biomass and the PHA resin are as described above.

Meanwhile, according to an embodiment of the present invention, there is provided a process for preparing a biodegradable film, which comprises (1) melt-extruding biomass and a polyhydroxyalkanoate (PHA) resin to prepare biodegradable pellets; and (2) molding the biodegradable pellets.

Referring to Fig. 1, the process for preparing a biodegradable film (S100) comprises melt-extruding biomass and a polyhydroxyalkanoate (PHA) resin to prepare biodegradable pellets (S 110).

The biomass and the PHA resin are as described above.

Meanwhile, according to an embodiment of the present invention, the biomass may comprise epoxidized biomass.

The epoxidation treatment may comprise polymerizing the biomass with epihalohydrin in an alkali solution to obtain an epoxy-polymerized biomass (step A); and filtering and drying the epoxy-polymerized biomass (step B).

The alkali solution may comprise at least one selected from the group consisting of sodium hydroxide, ammonia, lithium hydroxide, and calcium hydroxide.

The amount of the alkali solution used may be 1 to 10% by weight based on the total weight of the reaction composition. Here, the reaction composition may comprise an alkaline solution, biomass, and epihalohydrin.

The epihalohydrin may comprise epichlorohydrin.

In addition, the amount of the epihalohydrin used may be, for example, 1 to 200 moles, for example, 10 to 200 moles, or, for example, 50 to 200 moles, relative to 1 equivalent of the hydroxyl group (OH group) of the biomass.

The polymerization may be carried out at, for example, 25°C to 150°C or 25°C to 100°C.

The drying may be carried out at 25°C to 80°C.

Meanwhile, the biomass and the PHA resin may each be in the form of powder, granules, or pellets. Specifically, the biomass and the PHA resin may each be in the form of pellets, and the biodegradable resin composition comprising them may also be in the form of pellets.

That is, since the biodegradable resin composition according to the present invention is used as a masterbatch when a biodegradable film or a biodegradable mulching film is prepared, it is preferable to be in the form of pellets. The biodegradable resin composition in the form of pellets may be prepared by mixing and melting the components constituting the same and then extruding it through a twin-screw extruder or the like while pelletizing the extrudate.

The cutting step may be carried out using a pellet cutter without limitations as long as it is commonly used in the art, and the pellets may have various shapes.

In addition, a step of drying the pellets may be further carried out. The drying may be carried out at 60°C to 100°C for 2 hours to 12 hours. Specifically, the drying may be carried out at 65°C to 95°C, 70°C to 90°C, or 75°C to 85°C, for 3 hours to 12 hours or 4 hours to 10 hours. As the drying step conditions of the pellets satisfy the above range, quality may be further enhanced.

Meanwhile, according to an embodiment of the present invention, the PHA resin may comprise the first PHA resin, the second PHA resin, or a mixed resin of the first PHA resin and the second PHA resin.

The types and specific characteristics of the first PHA resin and the second PHA resin are as described above.

In addition, depending on the intended use and physical property design, the biodegradable resin composition comprising the biomass and the PHA resin may further comprise a physical property improver, an additive, and/or a biodegradable resin.

The physical property improver, the additive, and the biodegradable resin are as described above.

Meanwhile, the biomass and the PHA resin may be melt-extruded to obtain biodegradable pellets.

According to an embodiment of the present invention, if the PHA resin comprises a mixed resin of the first PHA resin and the second PHA resin, the first PHA resin, the second PHA resin, and the biomass may be melt-extruded to form pellets.

According to another embodiment of the present invention, if the physical property improver, the additive, and the biodegradable resin are further employed, the PHA resin (the first PHA resin and the second PHA resin), the biomass, the physical property improver, the additive, and/or the biodegradable resin may be melt-extruded to form pellets.

The melt-extrusion temperatures of the PHA resin and the biomass may be individually controlled. The melt extrusion may be carried out at a temperature of 120°C to 200°C.

Specifically, the extrusion temperature of the PHA resin and the extrusion temperature of the biomass may be the same or different.

The extrusion temperature of the PHA resin may be, for example, 120°C to 200°C, for example, 120°C to 190°C, for example, 130°C to 180°C, for example, 140°C to 170°C.

The extrusion temperature of the biomass may be, for example, 120°C to 200°C, for example, 120°C to 190°C, for example, 130°C to 180°C, for example, 140°C to 170°C.

In addition, after the melt extrusion, thermal treatment (heat setting) and/or drying may be further carried out. Process conditions used in the present field can be used as the process conditions of these steps as long as the desired effects in the present invention are not impaired.

Referring back to Fig. 1, the process for preparing a biodegradable film (S100) comprises molding the biodegradable pellets (S120).

The molding may be carried out by processing the biodegradable pellets into a desired shape and then cooling, so that the shape is hardened and crystallization is induced. The shape comprises fibers, filaments, films, sheets, rods, or other shapes, but it is not limited thereto. The molding may be carried out by any method known in the art, such as extrusion molding, injection molding, compression molding, pressure molding, blowing or blow molding (e.g., blown film, blowing of foam), calendering, rotomolding, casting (e.g., cast sheet, cast film), or thermoforming.

For example, the extrusion molding conditions may vary depending on the use of the biodegradable film, and the extrusion may be carried out by a commonly used process. For example, the extrusion molding may be carried out at 100°C to 180°C using a twin-screw extruder.

For example, the molding may comprise blow molding.

The blow molding conditions may vary depending on the use of the biodegradable film, and the blow molding may be carried out by a commonly used process. For example, the biodegradable resin pellets may be blow-molded at 100°C to 180°C using a blown film extruder.

The biodegradable film is characterized by excellent mechanical properties, particularly excellent strength and flexibility, and biodegradability of 90% or more in soil and ocean.

The biodegradability indicates the rate of decomposition as compared with the standard material (e.g., cellulose) in the same period. The Ministry of Environment of Korea defines a biodegradable material whose biodegradability is 90% or higher as compared with the standard material.

### [Physical properties of the biodegradable film]

The biodegradable film according to an embodiment of the present invention can be biodegraded by any one of microorganisms, moisture, oxygen, light, and heat, and has excellent mechanical properties.

Specifically, the biodegradable film may have a tensile strength of, for example, 5 to 50 MPa, 10 to 45 MPa, for example, 10 to 40 MPa, for example, 15 to 40 MPa, or 15 to 35 MPa.

In addition, the tensile strength of the biodegradable film may be the same or different in the longitudinal direction (MD) and the transverse direction (TD) of the biodegradable film.

For example, the biodegradable film may have a tensile strength in the longitudinal direction (MD) of, for example, 5 to 50 MPa, 10 to 45 MPa, for example, 10 to 40 MPa, for example, 15 to 40 MPa, or 15 to 35 MPa.

The biodegradable film may have a tensile strength in the transverse direction (TD) of, for example, 5 to 50 MPa, 10 to 45 MPa, for example, 10 to 40 MPa, for example, 15 to 35 MPa, or 15 to 30 MPa.

The biodegradable film is cut to 100 mm in length and 15 mm in width and mounted to a universal tester of INSTRON (4206-001, manufacturer: UTM) at a spacing between chucks of 50 mm in accordance with ASTM-D882. Testing is performed at a tensile speed of 200 mm/minute at room temperature of 25°C, and the tensile strength is measured with a program installed in the device. If the tensile strength satisfies the above range, it is possible to enhance the productivity, processability, and moldability of the biodegradable film at the same time.

In addition, the biodegradable film may have an elongation of, for example, 50% to 900%, for example, 100% to 900%, for example, 100% to 800%, for example, 100% to 700%, for example, 100% to 600%, for example, 100% to 500%, for example, 120% to 450%, or, for example, 150% to 450%.

In addition, the elongation of the biodegradable film may be the same or different in the longitudinal direction (MD) and the transverse direction (TD) of the biodegradable film.

For example, the biodegradable film may have an elongation in the longitudinal direction (MD) of, for example, 50% to 900%, for example, 100% to 900%, for example, 100% to 800%, for example, 100% to 700%, for example, 100% to 600%, for example, 100% to 400%, for example, 100% to 350%, for example, 120% to 320%, for example, 120% to 300%, or, for example, 120% to 250%.

The biodegradable film may have an elongation in the transverse direction (TD) of, for example, 50% to 900%, for example, 100% to 900%, for example, 100% to 800%, for example, 100% to 700%, for example, 100% to 600%, for example, 100% to 500%, for example, 150% to 450%, for example, 200% to 450%, or, for example, 250% to 450%. If the elongation satisfies the above range, it may be advantageous from the viewpoint of the flexibility of a film.

The biodegradable film is cut to a size of 4 cm in length and 1 cm in width and measured for the maximum deformation just before fracture with a universal tester of INSTRON (4206-001, manufacturer: UTM) at a tensile speed of 50 mm/minute. The ratio of the maximum deformation to the initial length is calculated as the elongation.

Meanwhile, the biodegradable film may have a tensile modulus of, for example, 50 to 400 MPa, for example, 80 to 350 MPa, for example, 100 to 350 MPa, or 100 to 300 MPa, on a strain-stress curve. If the tensile modulus satisfies the above range, it may be advantageous from the viewpoint of the flexibility of a film.

In addition, the tensile modulus of the biodegradable film may be the same or different in the longitudinal direction (MD) and the transverse direction (TD) of the biodegradable film.

For example, the biodegradable film may have a tensile modulus in the longitudinal direction (MD) of, for example, 100 to 400 MPa, 150 to 350 MPa, for example, 180 to 320 MPa, or, for example, 200 to 300 MPa.

The biodegradable film may have a tensile modulus in the transverse direction (TD) of, for example, 50 to 300 MPa, 80 to 300 MPa, for example, 100 to 300 MPa, for example, 100 to 250 MPa or 100 to 200 MPa.

The biodegradable film is cut to 100 mm in length and 15 mm in width and mounted to a universal tester of INSTRON (4206-001, manufacturer: UTM) at a spacing between chucks of 50 mm in accordance with ASTM-D882. Testing is performed at a tensile speed of 200 mm/minute at room temperature of 25°C, and the tensile modulus is measured with a program installed in the device. If the tensile modulus satisfies the above range, it is possible to enhance the productivity, processability, and moldability of the biodegradable film at the same time.

Further, the biodegradable film is characterized by a biodegradability of 90% or more in soil and ocean. The biodegradability indicates the rate of decomposition as compared with the standard material (e.g., cellulose) in the same period. The Ministry of Environment of Korea defines a biodegradable material whose biodegradability is 90% or higher as compared with the standard material.

### [Biodegradable mulching film and process for preparing the same]

According to an embodiment of the present invention, there is provided a biodegradable mulching film formed from the biodegradable resin composition.

Specifically, the mulching film may be formed from a biodegradable resin composition, which comprises biomass and a polyhydroxyalkanoate (PHA) resin.

Specifically, the mulching film may be prepared by a process, which comprises melt-extruding biomass and a polyhydroxyalkanoate (PHA) resin to prepare biodegradable pellets; and molding the biodegradable pellets.

The molding may be carried out by any method known in the art, such as extrusion molding, injection molding, compression molding, pressure molding, blowing or blow molding (e.g., blown film, blowing of foam), calendering, rotomolding, casting (e.g., cast sheet, cast film), or thermoforming. Specifically, the molding may comprise, for example, extrusion molding or blow molding at 100°C to 180°C.

According to an embodiment of the present invention, it is possible to provide a biodegradable film and a mulching film, which can be biodegraded in both soil and ocean and have excellent quality with enhanced flexibility and a proper level of strength at the same time, using the biodegradable resin composition.

The physical properties of the mulching film may be similar to, or the same as, those of the biodegradable film.

In particular, as the biodegradable resin composition is used, the mulching film is effective in blocking ultraviolet rays, thereby preventing itself from aging by ultraviolet rays, resulting in improved lifespan characteristics.

In addition, the mulching film may produce excellent effects such as suppression of moisture evaporation, suppression of weed growth, suppression of loss of fertilizer components in the soil, function of constant temperature and humidity, and keeping warm.

### Mode for the Invention

Hereinafter, the present invention will be described in detail with reference to Examples. But the following examples are intended to illustrate the present invention, and the scope of the present invention is not limited thereto only.

### <Example>

### Example 1

As shown in Table 1 below, a polybutylene adipate terephthalate (PBAT) resin (manufacturer: Ankor Bioplastics), a PHA resin (3-HB-co-4-HB, aPHA) (manufacturer: CJ), coffee grounds (coffee waste) (manufacturer: CJ), and a diacid-based additive were melt-extruded to obtain biodegradable pellets.

The melt extrusion was carried out at about 160°C, and the extrudate was cooled to about 30°C and cut with a pellet cutter to prepare pellets.

The pellets were dried at about 80°C for 4 hours and blow-molded at about 150°C to prepare a biodegradable film.

### Example 2

A biodegradable film was prepared in the same manner as in Example 1, except that epoxidized coffee grounds were used instead of the coffee grounds of Example 1 as shown in Table 1 below.

The epoxidized coffee grounds were obtained by polymerizing the coffee grounds (coffee waste) as biomass with epichlorohydrin at about 80°C for about 5 hours in an alkaline solution of 2% NaOH.

The epoxy-polymerized coffee grounds were filtered using a filter and dried at about 50°C for 5 hours.

### Examples 3 and 4

A biodegradable film was prepared in the same manner as in Example 2, except that the composition of the biodegradable film was changed as shown in Table 1 below.

### Examples 5 and 6

A biodegradable film was prepared in the same manner as in Example 2, except that epoxidized soybean hulls were used instead of the epoxidized coffee grounds and that the composition of the biodegradable film was changed as shown in Table 1 below.

### Examples 7 and 8

A biodegradable film was prepared in the same manner as in Example 2, except that epoxidized corncobs were used instead of the epoxidized coffee grounds and that the composition of the biodegradable film was changed as shown in Table 1 below.

### Examples 9 and 10

A biodegradable film was prepared in the same manner as in Example 2, except that epoxidized cellulose was used instead of the epoxidized coffee grounds and that the composition of the biodegradable film was changed as shown in Table 1 below.

### Example 11

A biodegradable film was prepared in the same manner as in Example 1, except that lignin was used instead of the coffee grounds and that the composition of the biodegradable film was changed as shown in Table 1 below.

### Example 12

A biodegradable film was prepared in the same manner as in Example 11, except that epoxidized lignin was used instead of the lignin as shown in Table 1 below.

### Comparative Example 1

A biodegradable film was prepared in the same manner as in Example 1, except that the biodegradable film did not comprise PHA and biomass while comprising a PBAT resin and thermoplastic starch (TPS) alone as shown in Table 1 below.

### Comparative Example 2

A biodegradable film was prepared in the same manner as in Example 1, except that the biodegradable film did not comprise a PHA resin while comprising a PBAT resin and coffee grounds alone as shown in Table 1 below.

### Comparative Example 3

A biodegradable film was prepared in the same manner as in Comparative Example 2, except that epoxidized coffee grounds were used instead of the coffee grounds as shown in Table 1 below.

### Test Example

### Test Example 1: Tensile strength

The biodegradable films prepared in the Examples and Comparative Examples were each cut to 100 mm in length and 15 mm in width and mounted to a universal tester of INSTRON (4206-001, manufacturer: UTM) at a spacing between chucks of 50 mm in accordance with ASTM-D882. Testing was performed at a tensile speed of 200 mm/minute at room temperature of 25°C, and the tensile strength was measured with a program installed in the device.

### Test Example 2: Elongation

The biodegradable films prepared in the Examples and Comparative Examples were each cut to a size of 4 cm in length and 1 cm in width and measured for the maximum deformation just before fracture with a universal tester of INSTRON (4206-001, manufacturer: UTM) at a tensile speed of 50 mm/minute. The ratio of the maximum deformation to the initial length was calculated as the elongation.

The tensile strength and elongation of the biodegradable films obtained in the Examples and Comparative Examples are summarized in Table 1 below.

**[Table 1]**

| | | | |
|---|---|---|---|
| | | | |
| Ex. 1 | PBAT:PHA:coffee grounds 67:17:17 | 13.16 | 56.92 |
| Ex. 2 | PBAT:PHA:coffee grounds (epoxidized) 67:17:17 | 15.61 | 277.60 |
| Ex. 3 | PBAT:PHA:coffee grounds (epoxidized) 57:14:29 | 16.84 | 103.39 |
| Ex. 4 | PBAT:PHA:coffee grounds (epoxidized) 75:8:17 | 24.57 | 438.86 |
| Ex. 5 | PBAT:PHA:soybean hulls (epoxidized) 67:17:17 | 7.80 | 141.27 |
| Ex. 6 | PBAT:PHA:soybean hulls (epoxidized) 57:14:29 | 7.57 | 54.69 |
| Ex. 7 | PBAT:PHA:comcobs (epoxidized) 67:17:17 | 8.48 | 169.40 |
| Ex. 8 | PBAT:PHA:comcobs (epoxidized) 57:14:29 | 8.41 | 50.48 |
| Ex. 9 | PBAT:PHA:cellulose (epoxidized) 67:17:17 | 23.79 | 530.94 |
| Ex. 10 | PBAT:PHA:cellulose (epoxidized) 57:14:29 | 18.50 | 400.04 |
| Ex. 11 | PBAT:PH.A lignin 57:14:29 | 13.84 | 610.86 |
| Ex. 12 | PBAT:PHA:lignin (epoxidized) 57:14:29 | 17.33 | 778.00 |
| C. Ex. 1 | PBAT:TPS 75∼80:20∼25 | 20.00 | 380.00 |
| C. Ex. 2 | PBAT:PHA: coffee grounds 83:0:17 | 40.40 | 82.51 |
| C. Ex. 3 | PBAT:PHA:coffee grounds (epoxidized) 83:0: 17 | 8.68 | 100.82 |

As can be seen from Table 1 above, the biodegradable films of Examples 1 to 12 were significantly excellent in tensile strength and elongation as compared with the biodegradable films of Comparative Examples 1 to 3. Further, the biodegradable films of Examples 1 to 12 were biodegradable in both soil and ocean.

Specifically, as the biodegradable films of Examples 1 to 12 comprised a PHA resin and biomass of coffee grounds, soybean hulls, corncobs, cellulose, or lignin, the tensile strength was about 7.57 to about 24.57 MPa, and the elongation was about 50.48% to about 778.00%, indicating excellent flexibility while maintaining appropriate strength. In addition, most of the biodegradable films in the Examples were very excellent in elongation in the range of 100% to 900%.

In contrast, in the film of Comparative Example 1, which did not comprise biomass and a PHA resin while comprising a PBAT resin and TPS alone, tensile strength and elongation were excellent whereas it is expected that biodegradability in soil and ocean is significantly poorer than those of the biodegradable films of Examples 1 to 12, or biodegradation would take a long period of time.

In addition, in the films of Comparative Examples 2 and 3, which did not comprise a PHA resin while comprising a PBAT resin and coffee grounds alone, tensile strength and elongation were significantly reduced as compared with the biodegradable films of Examples 3 and 4 comprising a PHA resin and coffee grounds. In addition, in the films of Comparative Examples 2 and 3, which did not comprise a PHA resin, it is expected that biodegradability in soil and ocean is significantly poorer than those of the biodegradable films of Examples 1 to 12, or biodegradation would take a long period of time.

Meanwhile, it was confirmed that the tensile strength and elongation varied depending on whether biomass was epoxidized or not.

Specifically, although the biodegradable film of Example 2 had the same composition as that of the biodegradable film of Example 1, the tensile strength was about 15.61 MPa, and the elongation was about 277.60% as epoxidized biomass was used, indicating that the tensile strength and elongation were significantly increased as compared with the biodegradable film of Example 1 having a tensile strength of about 13.16 MPa and an elongation of about 56.92%.

Therefore, when the biodegradable film comprises a PHA resin and epoxidized biomass, the elongation can be enhanced while maintaining appropriate tensile strength, and an excellent film can be achieved since it is biodegradable in both soil and ocean.

## Claims

1. A biodegradable resin composition, which comprises biomass and a polyhydroxyalkanoate (PHA) resin.

2. The biodegradable resin composition of claim 1, wherein the polyhydroxyalkanoate (PHA) resin is a copolymerized polyhydroxyalkanoate resin comprising at least one repeat unit selected from the group consisting of 3-hydroxybutyrate (3-HB), 3-hydroxypropionate (3-HP), 3-hydroxyvalerate (3-HV), 3-hydroxyhexanoate (3-HH), 4-hydroxyvalerate (4-HV), 5-hydroxyvalerate (5-HV), and 6-hydroxyhexanoate (6-HH), and a 4-hydroxybutyrate (4-HB) repeat unit.

3. The biodegradable resin composition of claim 1, wherein the polyhydroxyalkanoate (PHA) resin comprises a first PHA resin and a second PHA resin,
the first PHA resin comprises a 4-HB repeat unit in an amount of 15% by weight to 60% by weight based on the total weight of the first PHA resin,
the second PHA resin comprises a 4-HB repeat unit in an amount of 0.1% by weight to 30% by weight based on the total weight of the second PHA resin, and
the content of the 4-HB repeat unit of the first PHA resin and the content of the 4-HB repeat unit of the second PHA resin are different from each other.

4. The biodegradable resin composition of claim 1, wherein the biomass comprises an epoxidized hydroxyl group (OH group).

5. The biodegradable resin composition of claim 4, wherein the biomass comprises at least one selected from the group consisting of herbal-derived natural materials, woody-derived natural materials, lignin, cellulose, and bio by-products.

6. The biodegradable resin composition of claim 1, which comprises the biomass in an amount of 10 to 50% by weight and the polyhydroxyalkanoate (PHA) resin in an amount of 10 to 80% by weight, based on the total weight of the biodegradable resin composition.

7. The biodegradable resin composition of claim 3, which comprises the first PHA resin in an amount of 5% by weight to 80% by weight and the second PHA resin in an amount of 5% by weight to 80% by weight, based on the total weight of the biodegradable resin composition.

8. The biodegradable resin composition of claim 3, wherein the weight ratio of the first PHA resin to the second PHA resin to the biomass is 1:0.5 to 9:1 to 2.

9. The biodegradable resin composition of claim 3, wherein the first PHA resin has a glass transition temperature (Tg) of -45°C to -10°C,
the second PHA resin satisfies at least one characteristic selected from a glass transition temperature (Tg) of -30°C to 80°C, a crystallization temperature (Tc) of 70°C to 120°C, and a melting temperature (Tm) of 100°C to 170°C, and
the glass transition temperature (Tg) of the first PHA resin and the glass transition temperature (Tg) of the second PHA resin are different from each other.

10. The biodegradable resin composition of claim 1, wherein the biodegradable resin composition further comprises at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS).

11. The biodegradable resin composition of claim 1, wherein the biodegradable resin composition further comprises a physical property improver, and the physical property improver comprises at least one selected from the group consisting of diamines, diacids, and isocyanates.

12. The biodegradable resin composition of claim 1, wherein the biodegradable resin composition further comprises at least one additive selected from the group consisting of pigments, colorant absorbers, light absorbers, antioxidants, compatibilizers, weight agents, nucleating agents, melt strength enhancers, and slip agents.

13. A biodegradable film, which comprises biomass and a polyhydroxyalkanoate (PHA) resin.

14. The biodegradable film of claim 13, which has a tensile strength of 5 to 50 MPa and an elongation of 50% to 900% when measured using a universal testing machine (UTM) in accordance with ASTM D 882.

15. A process for preparing a biodegradable film, which comprises (1) melt-extruding biomass and a polyhydroxyalkanoate (PHA) resin to prepare biodegradable pellets; and (2) molding the biodegradable pellets.

16. The process for preparing a biodegradable film of claim 15, wherein the biomass comprises epoxidized biomass, and
the epoxidation treatment comprises polymerizing the biomass with epihalohydrin in an alkali solution to obtain an epoxy-polymerized biomass; and filtering and drying the epoxy-polymerized biomass.

17. The process for preparing a biodegradable film of claim 15, wherein the polyhydroxyalkanoate (PHA) resin comprises a first PHA resin and a second PHA resin,
the first PHA resin comprises a 4-HB repeat unit in an amount of 15% by weight to 60% by weight based on the total weight of the first PHA resin,
the second PHA resin comprises a 4-HB repeat unit in an amount of 0.1% by weight to 30% by weight based on the total weight of the second PHA resin, and
the content of the 4-HB repeat units of the first PHA resin and the content of the 4-HB repeat units of the second PHA resin are different from each other.

18. The process for preparing a biodegradable film of claim 15, wherein the melt extrusion is carried out at a temperature of 120°C to 200°C, and the molding is carried out by extrusion molding or blow molding at 100°C to 180°C.

19. A biodegradable mulching film, which is formed from the biodegradable resin composition of any one of claims 1 to 12.
